# EUROPÄISCHE PATENTSCHRIFT

(11) **EP 3 286 614 B1**
(45) Veröffentlichungstag und Bekanntmachung des Hinweises auf die Patenterteilung: **09.12.2020**
(21) Anmeldenummer: 17715103.2
(22) Anmeldetag: 30.03.2017
(51) Int. Cl.: G05B 19/409

(54) **BEDIENSYSTEM FÜR EINE MASCHINE DER LEBENSMITTELINDUSTRIE**
OPERATING SYSTEM FOR A MACHINE OF THE FOOD INDUSTRY
SYSTÈME DE COMMANDE D'UNE MACHINE S'UTILISANT DANS L'INDUSTRIE ALIMENTAIRE

(30) Priorität: 26.04.2016 DE 102016207009
(43) Veröffentlichungstag der Anmeldung: 28.02.2018
(73) Patentinhaber: Krones AG, 93073 Neutraubling (DE)
(72) Erfinder: HOFERER, Dr. Maximilian, 93073 Neutraubling (DE); VOGL, Sebastian, 93073 Neutraubling (DE); STAUBER, Thomas, 93073 Neutraubling (DE); RESCHKE, Johannes, 93073 Neutraubling (DE)
(74) Vertreter: Grünecker Patent- und Rechtsanwälte PartG mbB
(86) Internationale Anmeldenummer: PCT/EP2017/057598
(87) Internationale Veröffentlichungsnummer: WO 2017/186450

(56) Entgegenhaltungen:
- EP-A2- 0 083 725
- WO-A1-2007/066166
- WO-A2-02/50649
- DE-A1-102012 217 573
- US-A1- 2012 235 896
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN", WERKSTATTSTECHNIK, SPRINGER VERLAG. BERLIN, DE, Bd. 86, Nr. 5, 1. Mai 1996 (1996-05-01), Seiten 248-252, XP000585192, ISSN: 0340-4544

## Beschreibung

Die Erfindung betrifft ein Bediensystem für eine Maschine der Getränkemittelindustrie.

Üblicherweise bedient ein Benutzer von Getränkeverarbeitungsanlagen die einzelnen Maschinen über ein Bediensystem. Dabei können durch das Bediensystem beispielsweise einzelne Abläufe in der Maschine ausgelöst, Parameter eingestellt und/oder Alarm- bzw. Warnsignale empfangen werden. Hierbei werden üblicherweise stationäre Bediengeräte und in zunehmenden Maße auch mobile Bediengeräte eingesetzt, wobei die mobilen Bediengeräte mit der gesamten Anlage kompatibel sind bzw. für unterschiedliche Maschinen eingesetzt werden können. Hierbei kann der Benutzer ein mobiles Bediengerät zur jeweiligen Maschine mitnehmen und gleichzeitig Funktionen anderer Maschinen ausführen oder überwachen.

Durch ein Human-Machine-Interface (HMI) wird dem Benutzer eine Software-Oberfläche zu Einstellungen, Steuerungen, Bedienelementen und Informationen von Maschinen zur Verfügung gestellt. Im Allgemeinen erfolgt die Anzeige des HMI über ein Display, das an der Maschine selbst angebracht ist und beispielsweise mittels einer berührungsempfindlicher Anzeige von dem Benutzer bedient wird. Alternativ kann ein HMI auch an einem mobilen Bediengerät, wie einem Mobiltelefon, Laptop oder Tablet-Computer angezeigt und bedient werden.

Beispielsweise legt der Benutzer im Bereich einer bestimmten Maschine das mobile Bediengerät ab und kann bei Bedienvorgängen oder auch Reparaturvorgängen das Display des mobilen Bediengeräts zur Anzeige des HMI im Auge behalten, um davon Informationen abzulesen und über das HMI die Maschine zu bedienen und einzustellen. Ebenso kann er über das Bediengerät einzelne Komponenten der Maschine steuern, um die Bedienvorgänge oder auch eine Reparatur durchzuführen.

Derartige Bediensysteme mit mobilen Bediengeräten erweisen sich in der Praxis oft als unergonomisch, da sie am Körper, in Taschen oder Halterungen befestigt sind bzw. aufbewahrt werden und somit nicht ständig einsehbar sind. Wenn der Benutzer das Bediengerät dann in eine Hand nimmt, hat er diese Hand dann nicht mehr frei, um Bedienvorgänge, Reparaturen, Wartungen und/oder Rüstvorgänge an der Maschine auszuführen. Gleichzeitig muss der Benutzer seinen Blick immer wieder von dem zu bedienenden/zu reparierenden Teil der Maschine abwenden, um das Display des Bediengeräts abzulesen.

Des Weiteren bringt das Bedienen von HMIs, egal ob fest installiert oder mobil, auch hygienische Einschränkungen mit sich, da ein HMI oftmals nicht nur von einer Person verwendet wird, sondern oft von vielen verschiedenen Benutzern bedient und somit berührt werden. Dadurch verbreiten sich leicht Keime, was sich gerade in Antiseptikbereichen in der Lebensmittelindustrie als sehr problematisch erweist.

DE 10 2012 217573 A1 offenbart ein Bediensystem für eine Maschine, insbesondere für eine Getränkeverarbeitungsmaschine, welches ein mobiles Bediengerät für die Maschine, einen Signalgeber zur Meldung von Alarm- und/oder Warnsignalen und eine Sicherheitsbrille zum Schutz der Augen eines Benutzers umfasst. Das Bediensystem kann eine Gestenerkennungseinheit umfassen, um Gesten des Benutzers in Maschinenkommandos zu verarbeiten.

WO 02/50649 A2 offenbart ein System zur anwendergesteuerten Verknüpfung von Informationen innerhalb eines Augmented-Reality-Systems. Um die in einem Sichtfeld des Benutzers dargestellten Textinformationen in Ruhe lesen zu können, auch wenn der Benutzer seinen Kopf bewegt, gibt der Techniker einen Sprachbefehl über ein Mikrofon an eine Steuerungseinheit. Über ein Sprachkommando, "freeze", kann die Auftrennung der Verknüpfung zwischen der angezeigten Information und dem Objekt erfolgen. Mit einem weiteren Sprachkommando, "defreeze", stößt der Benutzer den Befehlsprozess wieder an. EPO 0 083 725 A2 offenbart ein sprachgesteuertes Maschinensteuerungssystem, bei der eingegebene Sprachbefehle an die Maschine übermittelt werden und dort in entsprechende Befehle umgewandelt werden.

Der vorliegenden Erfindung liegt die Aufgabe zugrunde, ein Bediensystem für eine Maschine bereitzustellen, das in der Handhabung ergonomischer ist und einen ausreichenden Hygieneschutz bietet.

Die Aufgabe wird durch ein Bediensystem nach Anspruch 1 gelöst, gemäß dem das Bediensystem für eine Maschine der Getränkemittelindustrie eine Brille für einen Benutzer des Bediensystems, und einen Sendeempfänger zum Austauschen von Daten zwischen dem Bediensystem und der Maschine umfasst.

Die Brille umfasst ein Anzeigesystem, das insbesondere als Head-Mounted-Display oder virtuelle Netzhautanzeige oder Projektor ausgebildet ist, und dazu ausgelegt ist, ein Bedienelement und Informationen eines HMIs anzuzeigen. Des Weiteren umfasst das Bediensystem wenigstens ein Eingabemodul, das eine Benutzereingabe des Benutzers bezüglich mindestens einem der Bedienelemente ermöglicht. Das Bediensystem umfasst zudem ein Verarbeitungsmodul. Das Verarbeitungsmodul wandelt die erfasste Benutzereingabe in ein Eingabesignal zum Steuern der Maschine und/oder des HMIs um.

Das Eingabemodul umfasst ein Mikrofon zur Spracheingabe und gemäß weiterer Ausführungsformen eine Außenkamera zur Gestenerkennung und eine Innenkamera zur Eingabe mittels des Auges. Es können auch alle oder wenigstens ein Teil der verschiedenen Eingabemodule kombiniert werden. Entsprechende Verarbeitungsmodule können dabei ein Spracherkennungsmodul und ein visuelles Erkennungsmodul sein. Das Verarbeitungsmodul wandelt die Benutzereingaben in entsprechende Signale zur Steuerung des HMI und/oder der Maschine um.

So kann beispielsweise der Benutzer durch die Brille ein HMI einer Maschine sehen und gleichzeitig die Maschine selber sehen. Durch das Mikrofon kann der Benutzer eine Spracheingabe tätigen, wodurch die Spracheingabe durch das Spracherkennungsmodul verstanden wird und in ein Eingabesignal umgewandelt wird. Beispielsweise kann der Benutzer einen entsprechenden Sprachbefehl für die Auswahl von einem in dem HMI angezeigten Bedienelement sein, oder ein Sprachbefehl zum Navigieren durch das Menü des HMI, wie beispielsweise ein "Runterscrollen" oder "Weiterblättern" in einem HMI-Menü.

Dadurch, dass die Anzeige des HMI über eine Brille geschieht, werden einerseits die Augen des Benutzers vor gefährlichen Fremdkörpern geschützt und andererseits werden ihm direkt in die Brille Informationen und das HMI eingespielt. Durch die verschiedenen Eingabemöglichkeiten zur Steuerung des HMI hat der Benutzer beide Hände frei, um beispielsweise Reparaturvorgänge auszuführen, aber auch um einer erhöhten Hygieneforderung gerecht zu werden. Das Bediensystem ermöglicht somit eine vollständige Steuerung und Kontrolle der Maschine, ohne, dass ein Benutzer der Maschine die verschiedenen Knöpfe oder physische HMIs berühren muss. Darüber hinaus kann dem Benutzer in der Brille auch angezeigt werden, ob Alarme oder Warnungen der Maschine oder von anderen Maschinen vorliegen.

Das Bediensystem kann zur Bedienung der Maschine, mehrerer Maschinen, einer gesamten Anlage und/oder auch mehrerer Anlagen ausgebildet sein. Somit unterstützt das erfindungsgemäße Bediensystem in ergonomischerWeise den Benutzer bei der Bedienung und bietet eine Vielzahl von möglichen Eingabeformen für die Navigation durch ein HMI der Maschine.

Die Maschine kann in einer Getränkeverarbeitungsanlage angeordnet sein. Die Maschine kann eine computerbasierte Maschinensteuerung umfassen. Die Maschine kann eine Getränkeverarbeitungsmaschine und/oder eine Behälterbehandlungsmaschine sein, die insbesondere eine Streck-Blas-Maschine, ein Rinser, ein Füller, ein Verschließer, ein Etikettierer und/oder eine Verpackungsmaschine oder eine andere Getränkeverarbeitungsmaschine und/oder eine andere Behälterbehandlungsmaschine ist.

Die Brille kann auch zum Schutz gegen mechanische, thermische, chemische, biologische, elektrische und/oder optische Gefährdung ausgeführt sein. Die Brille kann entsprechend gesetzlicher Normen zum Arbeitsschutz ausgeführt sein.

Das Anzeigesystem kann als Head-Mounted-Display (HMD) ausgeführt sein. Bei einem Head-Mounted-Display kann eine abbildende Optik vor dem Auge so angeordnet sein, dass diese vor dem Auge des Benutzers eine virtuelle Abbildung eines Displays erzeugt. Die abbildende Optik des Head-Mounted-Displays kann halbdurchlässig ausgeführt sein, insbesondere, wobei der Benutzer eine Überlagerung der Umgebung mit den Informationen des Displays sehen kann. Alternativ kann das Anzeigesystem als virtuelle Netzhautanzeige ausgebildet sein, bei der ein Bild direkt auf die Netzhaut des Auges projiziert wird. Die virtuelle Netzhautanzeige kann einen Laser umfassen. Ebenso kann das Anzeigesystem als Projektor ausgebildet sein, mit dem die Information außerhalb der Brille auf eine Fläche projiziert wird. Der Projektor kann einen Laser und eine Scaneinheit umfassen. Hierdurch kann durch die Ablenkung des Lasers ein Bild direkt auf die Umgebung projiziert werden. Ebenso kann der Projektor als Miniaturprojektor ausgebildet sein, wobei insbesondere ein Display von einer LED beleuchtet wird und mit einer Optik abgebildet wird. Das Display des Head-Mounted-Displays bzw. des Projektors kann ein LCD, DLP oder LCoS sein. Weitere Implementierungsmöglichkeiten sind jedoch denkbar.

Der Sendeempfänger kann dazu ausgebildet sein, Daten zwischen der Brille und einer oder mehrerer Maschinen per Kabel, Glasfaser oder drahtlos per Luftschnittstelle zu übertragen. Der Begriff Luftschnittstelle bezeichnet die Übertragung von Daten mittels elektromagnetischer Wellen, zu der unter anderem folgende Übertragungsverfahren zählen: RFID, Mobilfunk, WLAN, GSM, UMTS, LTE (GERAN, UTRAN, E-UTRAN), Bluetooth, WiMAX, IrDA. Insbesondere kann der Sendeempfänger eine WLAN- oder Bluetooth-Schnittstelle umfassen. Der Sendeempfänger kann eine Empfängereinheit und/oder eine Sendeeinheit umfassen.

Bei dem Bediensystem kann die Brille auch einen Kopfhörer umfassen, mittels welchem akustische Signale und Anweisungen von dem HMI widergegeben werden können. Der Kopfhörer kann als In-Ear-Kopfhörer ausgebildet sein. Die Brille kann auch einen Gehörschutz zur Unterdrückung von störenden Umgebungsgeräuschen umfassen, der insbesondere mit aktiver Schallunterdrückung arbeitet. Dadurch benötigt der Benutzer keinen separaten Gehörschutz, der dann am Kopf bei gleichzeitigem Tragen der Brille drückt. Durch den Gehörschutz können zu laute Umgebungsgeräusche unterdrückt werden. Mit der aktiven Schallunterdrückung kann ein akustisches Gegensignal erzeugt werden, so dass störende Umgebungsgeräusche per Interferenz im Ohr ausgelöscht werden. Dadurch werden die störenden Umgebungsgeräusche besonders gut unterdrückt.

Bei dem Bediensystem kann die Brille eine Außenkamera zur Erfassung von Objekten im Sichtbereich des Benutzers umfassen. Die von der Außenkamera erfassten Bilder können über den Sendeempfänger zur Speicherung und/oder zur Kommunikation mit Kollegen übertragen werden. Dadurch können Kollegen des Benutzers direkt sehen, was der Benutzer im Blickfeld hat und diesen so beim Service der Anlage unterstützen. Darüber hinaus kann das Umgebungsbild der ersten Kamera über das Anzeigesystem dem Benutzer angezeigt werden, insbesondere wenn die Brille nicht transparent ausgeführt ist. Die erste Kamera kann als CCD- oder CMOS-Kamera mit einem Objektiv ausgeführt sein. Das Bediensystem kann eine Bildauswerteeinheit umfassen, die insbesondere dazu ausgebildet ist, Objekte in den Bilddaten automatisch zu erkennen. Dadurch können dem Benutzer automatisch Informationen zu den im Sichtbereich vorhandenen Objekten im Anzeigesystem der Brille angezeigt werden.

Die Außenkamera kann des Weiteren auch genutzt werden, um mittels Gesten des Benutzers eine Benutzereingabe zu erfassen. Beispielsweise kann die Außenkamera die Hände des Benutzers filmen und ein visuelles Erkennungsmodul des Bediensystems kann die Gesten der Hände des Benutzers in ein Eingabesignal für das HMI und/oder die Maschine umwandeln. Hierdurch kann der Benutzer mit den Händen Kommandos an das HMI über Gesten berührungsfrei abgeben. Dadurch wird die Interaktion mit dem HMI weiter vereinfacht und es müssen keine Knöpfe, Schalter oder andere physische Bedienelemente oder Oberflächen angefasst werden.

Die Brille kann eine oder mehrere Innenkameras umfassen, die zur Erfassung mindestens eines Auges des Benutzers ausgebildet ist. Dadurch kann die Blickrichtung des Benutzers besonders einfach erfasst werden. Die Bilder der Innenkamera werden an das visuelle Erkennungsmodul übertragen, welches dazu ausgelegt ist, Bewegungen und Blickrichtungen des Auges zu interpretieren. Basierend auf der erfassten Blickrichtung des Benutzers kann das visuelle Erkennungsmodul ein entsprechendes Eingabesignal zur Interaktion mit dem HMI und/oder der Maschine erzeugen. So kann beispielsweise bei vorhergehender Aktivierung der augenbasierten Benutzereingabe mittels Innenkamera ein Benutzer ein in der Brille angezeigtes Bedienelement des HMI auswählen, indem der Benutzer sein Auge auf dieses Bedienelement fokussiert und beispielsweise zweimal schnell hintereinander blinzelt. In diesem Beispiel entspricht die Auswahl des Bedienelements dem Fokussieren des Auges auf das Bedienelement und die Bestätigung des Ausführens der Funktionalität des Bedienelements entspricht dem zweimaligen schnellen Blinzeln des Benutzers. Es können jedoch auch andere Eingabeformen und Mechanismen verwendet werden, um eine Ausführungsbestätigung für eine Auswahl in die Brille einzugeben.

In einer Ausführungsform kann das visuelle Erkennungsmodul auch die Benutzereingaben der Außenkamera und der Innenkamera miteinander kombinieren, um eine noch größere Anzahl an unterschiedlichen Eingabeformen zur Verfügung zu stellen.

Die oben genannten verschiedenen Eingabemöglichkeiten können jeweils alle miteinander kombiniert werden, um dem Benutzer eine maximale Anzahl von Eingabemöglichkeiten zu bieten. Durch die Kombination von verschiedenen Eingabemöglichkeiten für die Steuerung des HMI ergibt sich eine sehr flexible Arbeitsweise, ohne dass ein Berühren der Maschine oder von Bedienelementen der Maschine notwendig macht.

Das Bediensystem kann ein Ortungssystem zur Erfassung der Position und/oder Orientierung der Brille umfassen, das insbesondere mindestens teilweise an der Brille angeordnet ist. Das Ortungssystem kann folgende Technologien umfassen: RFID, Bluetooth, WLAN und UWB. Das Ortungssystem kann außerdem Beschleunigungssensoren und/oder Lagesensoren umfassen. Ebenso kann das Ortungssystem ein Trackingsystem und Marker umfassen, die insbesondere für das Trackingsystem erkennbar sind. Das Trackingsystem kann mit der Maschine in einem festen Bezug stehen und die Marker an der Brille angebracht sein. Ebenso können das Trackingsystem an der Brille und die Marker an der Maschine angebracht sein, wobei insbesondere die Außenkamera die Marker als Bilddaten aufnimmt. Dadurch kann die Lage der Brille und damit der Sichtbereich des Benutzers relativ zur Maschine erfasst werden und dem Benutzer kann so entsprechend nur ein entsprechendes HMI eingeblendet werden, das für Objekte und/oder Maschinen im Sichtbereich gedacht sind. Erkennt das visuelle Erkennungsmodul beispielsweise, dass der Benutzer einen bestimmten Teil einer Maschine betrachtet, so kann das visuelle Erkennungsmodul ein oder mehrere Eingabesignale erzeugen, um dem Benutzer das entsprechende Menü, oder die entsprechenden Bedienelemente des bestimmten Teils des Maschine in dem HMI in der Brille anzeigt.

Darüber hinaus kann über das Ortungssystem der Ort des Benutzers in der gesamten Anlage bestimmt werden. Dadurch kann der Benutzer besonders einfach durch Kollegen aufgefunden werden. Die Erfassung der Position und/oder der Orientierung der Brille kann relativ zu der Maschine erfolgen.

Die Brille kann auch mit einem Haptiksystem verbunden sein, wie beispielsweise einer Vibrationseinheit, die haptische Rückmeldung gibt, sobald ein Alarm auftritt, oder einen kurzen Vibrationsimpuls ausgibt, wenn eine Benutzerauswahl durch die Brille getätigt wird. Das Haptiksystem kann am Körper des Benutzers oder an der Brille angebracht sein. Dadurch stört das Haptiksystem den Benutzer nicht bei der Arbeit. Durch die Integration in die Brille ist das Haptiksystem vom Benutzer besonders gut wahrzunehmen.

Das Haptiksystem kann einen Vibrator, ein akustische und/oder ein optisches Haptiksystem umfassen. Durch den Vibrator erhält der Benutzer einen Aktivierungsreiz, den er unabhängig von der Lautstärke der Umgebung wahrnehmen kann. Gleiches kann auch durch das optische Haptiksystem erzielt werden. Darüber hinaus kann der Benutzer durch das akustische Haptiksystem auf die Alarm- und/oder die Warnsignale hingewiesen werden, falls er keinen direkten Sichtkontakt mit dem Haptiksystem hat. Das Haptiksystem kann unterschiedliche Alarm- und/oder Warnsignaltypen als unterschiedlich codierte Vibrations-, Ton- und/oder Lichtsignale wiedergeben. Die unterschiedlichen Codierungen können dabei verschiedene Intensitäten oder Rhythmen aufweisen. Das optische Haptiksystem kann unterschiedliche Alarm- und/oder Warnsignaltypen mit unterschiedlichen Farben anzeigen. Das optische Haptiksystem kann ein Display umfassen.

Das Anzeigesystem in der Brille kann dazu ausgebildet sein, dem Benutzer auf jedem Auge ein unterschiedliches Bild darzustellen, insbesondere, um 3D-Informationen anzuzeigen. 3D-Informationen können dreidimensionale Informationen sein. Hierdurch können die Informationen virtuell für den Benutzer im Raum erscheinen. Dadurch kann der Benutzer die Informationen besonders einfach auseinanderhalten.

Weitere Merkmale und Vorteile der Erfindung werden nachfolgend anhand der beispielhaften Figuren erläutert. Dabei zeigen:
- Fig. 1: eine perspektivische Darstellung eines erfindungsgemäßen Bediensystems;
- Fig. 2: eine perspektivische Darstellung der Brille des erfindungsgemäßen Bediensystems aus der Fig. 1; und
- Fig. 3: ein Blockdiagram der Module der Brille des erfindungsgemäßen Bediensystems aus der Fig. 1

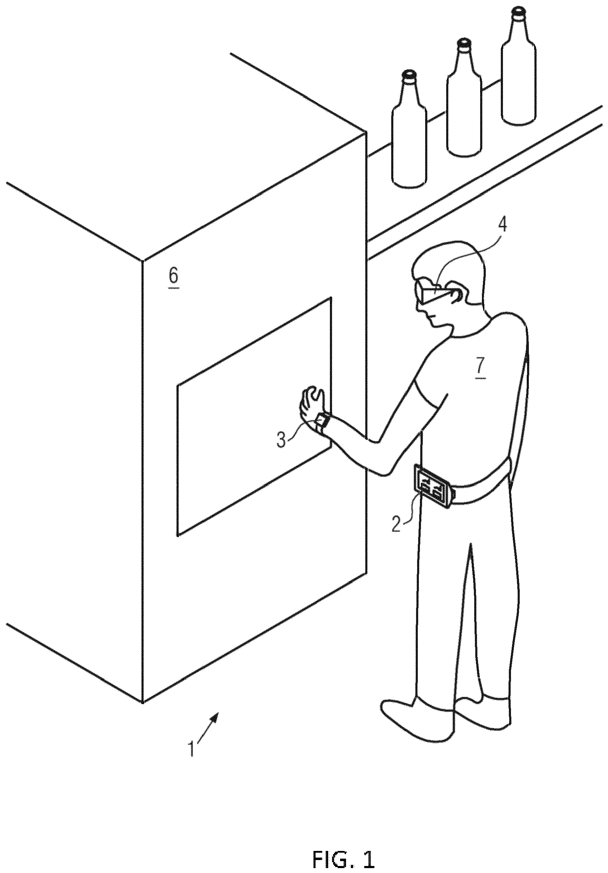

Fig. 1 zeigt eine perspektivische Darstellung eines erfindungsgemäßen Bediensystems 1. Zu sehen ist dabei, dass ein Benutzer 7 vor einer Maschine 6 zur Bedienung oder zur Wartung steht. Die dargestellte Maschine 6 ist hierbei eine Maschine der Lebensmittelindustrie, insbesondere der Getränkemittelindustrie.

Der Benutzer 7 trägt einen Gürtel, an dem eine mobile Vorrichtung 2 befestigt ist. Die mobile Vorrichtung 2 kann jedoch auch in einer Tasche des Benutzers 7 getragen werden und ist nicht notwendigerweise an einem Gürtel des Benutzers 7 befestigt. Gleichzeitig trägt der Benutzer 7 eine Brille 4, die ein Anzeigesystem umfasst, das als Head-Mounted-Display ausgeführt ist. Hierüber werden dem Benutzer 7 Bedienelemente und Informationen eines Human-Machine-Interface (HMI) ins Sichtfeld eingeblendet. An seinem linken Arm trägt der Benutzer 7 ein Haptiksystem 3. Das Haptiksystem 3 weist dabei sowohl einen Vibrator, als auch ein akustisches und ein optisches Haptiksystem auf. Hierüber können dem Benutzer 7 verschiedene Alarm- und/oder Warnsignale unabhängig von dem Anzeigesystem in der Brille 4 übermittelt werden. Dadurch ist die Wahrscheinlichkeit vermindert, dass der Benutzer 7 diese Signale nicht bemerkt.

Beim Service bzw. der Bedienung der Maschine 6 hat der Benutzer 7 beide Hände frei, um manuelle Tätigkeiten auszuführen. Gleichzeitig werden dem Benutzer 7 über das Anzeigesystem in der Brille 4 entsprechende Bedienelemente des HMI und Informationen über den Status der Maschine 6 angezeigt. Ebenfalls ist es möglich, dass dem Benutzer 7 Dokumentationen der Maschine 6 mittels des Anzeigesystems eingeblendet werden, mit denen er einen Service oder eine Bedienung durchführen kann.

Der Benutzer 7 kann die Maschine 6 mittels einem HMI steuern, dass in der Brille 4 angezeigt wird. Dem Benutzer 7 stehen dabei verschiedene Eingabeformen zur Verfügung, wie Sprache, Augengesten, Handgesten oder per mobiler Vorrichtung 2.

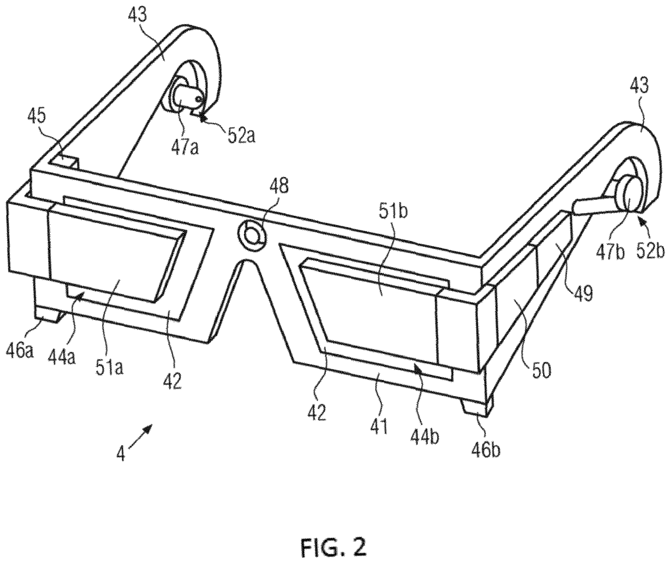

In Fig. 2 ist eine perspektivische Darstellung der Brille 4 des erfindungsgemäßen Bediensystems 1 aus der Fig. 1 dargestellt. Zu sehen ist dabei ein Brillenrahmen 41, in den Sicherheitsgläser 42 eingelassen sind. Des Weiteren weist die Brille 4 zwei Bügel 43 auf, die über die Ohren des Benutzers 7 getragen werden.

Vor jedem Brillenglas 42 der Brille 4 ist ein Anzeigesystem 44a, 44b angeordnet. Diese sind jeweils als Head-Mounted-Display 51a, 51b ausgeführt. Dabei weisen die Head-Mounted-Displays 51a, 51b Optiken auf, mit denen dem Benutzer 7 für jedes Auge jeweils unterschiedliche Bilder von LCD-/OLEDDisplays eingeblendet werden. Dabei sind die Head-Mounted-Displays 51a, 51b halbdurchlässig (semi-transparent) ausgeführt, so dass der Benutzer 7 gleichzeitig die Umgebung vor der Brille 4 sehen kann. Mit dem Anzeigesystem 44a, 44b können dem Benutzer 7 für jedes Auge jeweils unterschiedliche Bilder angezeigt werden, so dass er auch dreidimensionale Informationen betrachten kann. Folglich sieht der Benutzer 7 durch die Brille 4 einerseits die Umgebung und andererseits damit überlagerte, virtuelle Informationen, wie etwa das HMI einer Maschine.

Darüber hinaus weist die Brille 4 Kopfhörer 47a und 47b auf. Diese sind als Gehörschutz 52a, 52b ausgeführt. Hierbei sind die Kopfhörer 47a, 47b für jedes Ohr als Stöpsel (In-Ear-Kopfhörer) ausgebildet, so dass diese gegen den Hörkanal abdichten. Dadurch werden störende Umgebungsgeräusche unterdrückt und können nicht in den Hörkanal eindringen. Gleichzeitig erfassen Mikrophone 46a und 46b von außen die störenden Umgebungsgeräusche und geben zusätzlich ein Kompensationssignal durch die Kopfhörer 47a, 47b ab, so dass die verbleibenden Umgebungsgeräusche weiter vermindert werden. Darüber hinaus werden Nutzsignale, wie beispielsweise menschliche Stimmen durch die Mikrophone 46a, 46b erfasst und durch eine Filtereinheit (hier nicht dargestellt) herausgefiltert und dem Benutzer 7 von den Umgebungsgeräuschen isoliert über die Kopfhörer 47a, 47b, eingespielt. Dadurch ist es dem Benutzer 7 möglich, mit den Kollegen vor Ort zu kommunizieren.

Ebenfalls zu sehen ist ein Sendeempfänger 50, der als drahtlose Funkschnittstelle ausgeführt ist. Die Funkschnittstelle kann eine WLAN- oder Bluetooth-Schnittstelle sein. Mit dem Sendeempfänger 50 kann die Brille 4 mit der mobilen Vorrichtung 2 der Fig. 1 in Verbindung stehen. Ebenfalls kann die Brille 4 mit dem Haptiksystem 3 aus der Fig. 1 in Verbindung stehen. Durch diese Verbindung können Daten zwischen den Einheiten ausgetauscht werden.

Der Sendeempfänger 50 ist weiterhin dazu ausgelegt, Steuersignale und Eingabesignale zur Steuerung des HMI von der Brille 4 an die Maschine 6 zu übertragen. Umgekehrt empfängt die Brille über den Sendeempfänger 50 auch Informationen und Programmsignale zur Darstellung des HMI der Maschine 6.

Die Brille 4 weist zudem eine Außenkamera 48 auf, die nach vorne gerichtet ist und das Sichtfeld des Benutzers 7 erfasst. Dabei erzeugt die Außenkamera 48 Bilddaten von der Umgebung unmittelbar vor dem Benutzer 7, wobei diese über den Sendeempfänger 50 an Kollegen weitergeben werden können, so dass diese den Benutzer 7 beim Service unterstützen können. Des Weiteren erfasst die Außenkamera 48 die Hände des Benutzers 7, um dessen Gesten als Bildsequenzen aufzunehmen. Die so gewonnenen Bilder können an ein visuelles Erkennungsmodul übermittelt werden, um die gestengesteuerte Benutzereingabe in ein Eingabesignal zum Steuern der Maschine 6 und/oder des HMI umzuwandeln. Ebenso können aus den Bilddaten automatisch Objekte im Sichtbereich des Benutzers 7 erkannt werden.

Darüber hinaus verfügt die Brille 4 über wenigstens eine Innenkamera 45, die auf ein Auge des Benutzers 7 gerichtet ist. Bilddaten der Innenkamera 45 werden ebenfalls zu dem visuellen Erkennungsmodul weitergeleitet, um Benutzereingaben zu analysieren und entsprechende Eingabesignale zum Steuern der Maschine 6 und/oder des HMIs zu erzeugen.

Zusätzlich weist die Brille 4 ein Ortungssystem 49 auf, mit dem die Lage und Position der Brille 4 bestimmt werden kann. Das Ortungssystem 49 weist dabei mehrere Beschleunigungssensoren und Lagesensoren auf. Dadurch kann die Orientierung und Lage des Kopfs des Benutzers 7 zur Maschine 1 bestimmt werden, um beispielsweise über das Anzeigesystem 44a, 44b entsprechende Ausrichtungsinformationen anzuzeigen, zu der hin bestimmte Maschinenelemente positioniert werden müssen.

Die Brille 4 weist darüber hinaus einen Mikroprozessor als Steuereinheit und eine Batterie zur Energieversorgung auf (hier nicht dargestellt).

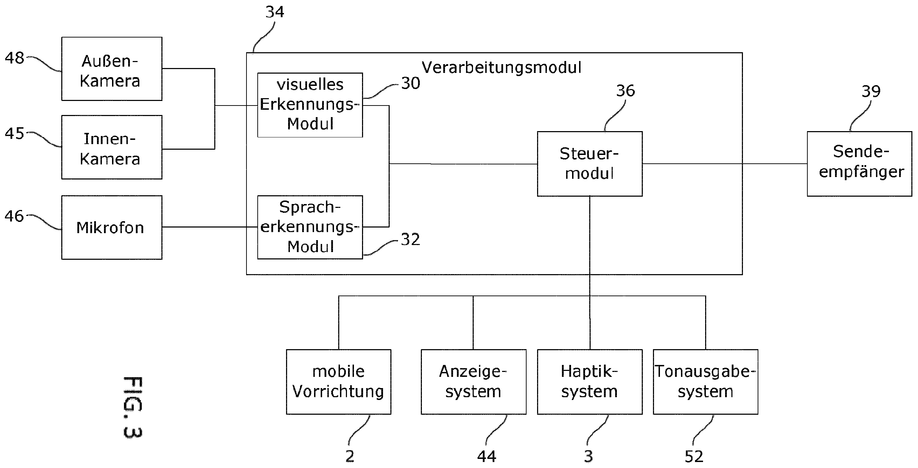

Fig. 3 zeigt ein Blockdiagram der Module der Brille des erfindungsgemäßen Bediensystems aus der Fig. 1. Die Brille 4 verfügt über verschiedene Eingabesysteme, wie eine Außenkamera 48, Innenkamera 45 und Mikrofon 46. Zusätzlich umfasst die Brille 4 über verschiedene Ausgabesysteme, wie das Anzeigesystem 44, das Haptiksystem 3 und das Tonausgabesystem 52. Zusätzlich kann an die Brille auch eine mobile Vorrichtung 2 gekoppelt sein, die sowohl als Eingabesystem als auch als Ausgabesystem betrieben werden kann.

Die Eingabemodule sind mit einem Verarbeitungsmodul 34 verbunden, um die Benutzereingaben entsprechend zu verarbeiten und in Eingabesignale zum Steuern der Maschine und/oder des HMIs umzuwandeln. Das Verarbeitungsmodul kann wenigstens ein visuelles Erkennungsmodul 30 und ein Spracherkennungsmodul umfassen. So sind die Außenkamera 48 und Innenkamera 45 mit dem visuellen Erkennungsmodul 30 verbunden. Das Mikrofon ist mit dem Spracherkennungsmodul 32 verbunden.

Das Verarbeitungsmodul 34 kann des Weiteren ein Steuermodul 36 umfassen, das den Betrieb und die einzelnen Operationen des visuellen Erkennungsmoduls 30 und des Spracherkennungsmoduls steuert. Des Weiteren kann das Steuermodul 36 die Daten und Signale mit dem Sendeempfänger 39 und den einzelnen Ausgabesystemen austauschen. Auch die mobile Vorrichtung 2 kann mit dem Steuermodul 36 direkt kommunizieren.

In der bevorzugten einer Ausführungsform ist das Verarbeitungssystem 34 Bestandteil der Brille 4.

Wenn das Verarbeitungsmodul 34 mit der mobilen Vorrichtung verbunden ist, kann die Kommunikation zwischen den Eingabemodulen und mobiler Vorrichtung 2 ebenfalls über den Sendeempfänger 39 geschehen, oder über einen weiteren Sendeempfänger, der nur für die Kommunikation zwischen Brille 4 und mobiler Vorrichtung 2 ausgebildet ist. Die Kommunikation zwischen Brille und mobiler Vorrichtung kann dabei drahtlos oder drahtgebunden sein.

Zu den oben aufgeführten Eingabemodulen (Außenkamera 48, Innenkamera 45, Mikrofon 46, mobile Vorrichtung 2) können noch weitere Eingabemodule hinzukommen, wie beispielsweise NFC, ein elektronischer Stift, und jede geeignete Form von Sensor. Auch die hierin beschriebenen Ausgabesysteme (Anzeigesystem 44, Haptiksystem 3, Tonausgabesystem 52, mobile Vorrichtung 2) sind nicht beschränkend, sondern es können zusätzlich auch weitere Ausgabesysteme vorgesehen sein.

Es versteht sich, dass in den zuvor beschriebenen Ausführungsbeispielen genannte Merkmale nicht auf diese speziellen Kombinationen beschränkt sind und auch in beliebigen anderen Kombinationen im Rahmen der beanspruchten Erfindung möglich sind.

## Patentansprüche

1. Bediensystem für eine Maschine (6) der Getränkemittelindustrie, wobei das Bediensystem umfasst:
eine Brille (4) für einen Benutzer (7) des Bediensystems, wobei die Brille umfasst:
ein Anzeigemodul (44), das insbesondere als Head-Mounted-Display oder virtuelle Netzhautanzeige oder Projektor ausgebildet ist, und dazu ausgelegt ist, wenigstens ein Bedienelement und Informationen eines Human-Machine-Interfaces, HMI, anzuzeigen;
einen Sendeempfänger (39) zum Austauschen von Daten zwischen dem Bediensystem und der Maschine (6);
ein Eingabemodul, das dazu ausgelegt ist, eine oder mehrere Benutzereingaben des Benutzers (7) bezüglich mindestens einem der Bedienelemente zu empfangen,
wobei das Eingabemodul mindestens ein Mikrofon (46a, 46b) zur Eingabe von Sprachinformation umfasst, und
wobei die eine oder mehreren Benutzereingaben Benutzereingaben zum Steuern des HMIs und Benutzereingaben zum Steuern der Maschine umfassen,
wobei die Benutzereingaben zum Steuern des HMIs einen Sprachbefehl zum Navigieren durch das Menü des HMIs umfassen und die Benutzereingaben zum Steuern der Maschine einen Sprachbefehl für die Navigation durch ein HMI der Maschine umfassen; und
wobei die Brille ein Verarbeitungsmodul (34) mit einem Spracherkennungsmodul (32) umfasst, das dazu ausgelegt ist, die eine oder mehreren erfassten Benutzereingaben entsprechend entweder in ein Eingabesignal zum Steuern der Maschine oder in ein Eingabesignal zum Steuern des HMIs umzuwandeln,
und das Verarbeitungsmodul weiterhin dazu ausgelegt ist, das Eingabesignal zur Weiterleitung an das HMI oder über den Sendeempfänger (39) an die Maschine auszugeben.

2. Bediensystem nach Anspruch 1, wobei das wenigstens eine Eingabemodul des Weiteren eine Außenkamera (48) zur Eingabe von einer Gesten umfasst, und wobei das Verarbeitungsmodul (32) des Weiteren ein visuelles Erkennungsmodul (30) umfasst, das dazu ausgelegt ist, die eingegebene Geste in das Eingabesignal umzuwandeln.

3. Bediensystem nach einem der Ansprüche 1 bis 2, wobei das wenigstens eine Eingabemodul des Weiteren eine Innenkamera (45) zur Erfassung von einer Blickrichtung und/oder Bewegung von wenigstens einem Auge des Benutzers (7) umfasst, und wobei das Verarbeitungsmodul (34) des Weiteren ein visuelles Erkennungsmodul (30) umfasst, das dazu ausgelegt ist, die erfasste Blickrichtung und/oder Bewegung in das Eingabesignal umzuwandeln.

4. Bediensystem nach einem der Ansprüche 1 bis 3, wobei das wenigstens eine Eingabemodul des Weiteren eine mobile Vorrichtung (2) umfasst, die mit der Brille (4) verbunden ist, und die zur direkten Eingabe des Eingabesignals ausgebildet ist.

5. Bediensystem nach einem der Ansprüche 1 bis 4, wobei das Bediensystem dazu ausgelegt ist, das HMI der Maschine (6) zu bedienen, ohne dass ein Berühren der Maschine und von Bedienelementen auf der Maschine erforderlich ist.

6. Bediensystem nach einem der Ansprüche 1 bis 5, wobei die das Bediensystem ein Ortungssystem zur Erfassung der Position und/oder Orientierung der Brille umfasst und dazu ausgelegt ist eines oder mehrere Bedienelemente und Informationen des HMIs zur Anzeige auszuwählen, basierend auf der Position und/oder Orientierung der Brille (4).

7. Bediensystem nach einem der Ansprüche 1 bis 6, wobei das Bedienelement und die Informationen des HMIs in der Brille (4) und/oder einem externen Anzeigebildschirm angezeigt werden.

## Claims

1. Operating system for a machine (6) in the beverage industry, the operating system comprising:
eyeglasses (4) for a user (7) of the operating system, wherein said eyeglasses comprise:
a display module (44), which is designed in particular as a head-mounted display or a virtual retina display or a projector, and is adapted to display at least a control element and information of a human machine interface, HMI;
a transceiver (39) for exchanging data between the operating system and the machine (6);
an input module adapted to receive one or more user input from the user (7) with respect to at least one of said control elements,
wherein said input module comprises at least one microphone (46a, 46b) for inputting speech information, and
wherein the one or more user input comprise user input for controlling the HMI and user input for controlling the machine,
wherein the user input for controlling the HMI comprises a speech command for navigating the menu of the HMI, and the user input for controlling the machine comprises a speech command for navigating an HMI of the machine; and
wherein said eyeglasses comprise a processing module (34) with a speech recognition module (32), adapted to convert the received one or more user input into an input signal for controlling the machine or an input signal for controlling the HMI, respectively,
and the processing module being further adapted to output the input signal to be forwarded to the HMI or via the transceiver (39) to the machine.

2. Operating system according to claim 1, wherein the at least one input module further comprises an external camera (48) for inputting a gesture, and wherein the processing module (32) further comprises a visual recognition module (30) adapted to convert the inputted gesture into the input signal.

3. Operating system according to one of claims 1 to 2, wherein the at least one input module further comprises an internal camera (45) for capturing a viewing direction and/or a motion of at least one eye of the user (7), and wherein the processing module (34) further comprises a visual recognition module (30) adapted to convert the captured viewing direction and/or motion into said input signal.

4. Operating system according to one of claims 1 to 3, wherein the at least one input module further comprises a mobile device (2), connected to the eyeglasses(4), and configured for direct input of said input signal.

5. Operating system according to one of claims 1 to 4, wherein the operating system is adapted to operate the HMI of the machine (6) without requiring touching of the machine and the control elements on said machine.

6. Operating system according to one of claims 1 to 5, wherein the operating system comprises a positioning system for detecting the position and/or orientation of the eyeglasses, adapted to select one or more control elements and information of the HMI for being displayed based on the position and/or orientation of the eyeglasses (4).

7. Operating system according to one of claims 1 to 6, wherein the control element and the information of the HMI are displayed in the eyeglasses (4) and/or on an external display screen.

## Revendications

1. Système d'exploitation pour une machine (6) de l'industrie des boissons, le système d'exploitation comprenant:
des lunettes (4) pour un utilisateur (7) du système de commande, les lunettes comprenant:
un module d'affichage (44), qui est conçu notamment comme un affichage monté sur la tête ou un affichage ou un projecteur virtuel de la rétine, et qui est conçu pour afficher au moins un élément de commande et des informations d'une interface homme-machine, IHM
un émetteur-récepteur (39) pour l'échange de données entre le système d'exploitation et la machine (6);
un module de saisie conçu pour recevoir une ou plusieurs entrées de l'utilisateur (7) en ce qui concerne au moins un des éléments de commande,
le module de saisie comprenant au moins un microphone (46a, 46b) pour la saisie d'informations vocales, et
la ou les saisies utilisateur comprenant les saisies utilisateur pour le commande de l'IHM et les saisies utilisateur pour le commande de la machine,
dans lequel les saisies utilisateur pour la commande de l'IHM comprennent une commande vocale pour la navigation dans le menu de l'IHM et les saisies utilisateur pour la commande du moteur comprennent une commande vocale pour la navigation dans une IHM du moteur; et
dans lequel les lunettes comprennent un module de traitement (34) ayant un module de reconnaissance vocale (32) conçu pour convertir la ou les entrées utilisateur détectées en conséquence soit en un signal de saisie pour commander la machine, soit en un signal de saisie pour commander l'IHM,
et le module de traitement est en outre conçu pour produire le signal de saisie à transmettre à l'IHM ou à la machine par le biais de l'émetteur-récepteur (39).

2. Système d'exploitation selon la revendication 1, dans lequel ledit au moins un module de saisie comprend en outre une caméra extérieure (48) pour entrer un geste, et dans lequel le module de traitement (32) comprend en outre un module de reconnaissance visuelle (30) conçu pour convertir le geste entré en signal de saisie.

3. Système d'exploitation selon l'une des revendications 1 ou 2, dans lequel ledit au moins un module de saisie comprend en outre une caméra intérieure (45) pour détecter une direction de visée et/ou un mouvement d'au moins un oeil de l'utilisateur (7), et dans lequel le module de traitement (34) comprend en outre un module de reconnaissance visuelle (30) conçu pour convertir la direction de visée et/ou le mouvement détecté en signal de saisie.

4. Système d'exploitation selon l'une des revendications 1 à 3, dans lequel ledit au moins un module de saisie comprend en outre un dispositif mobile (2) qui est relié aux lunettes (4) et qui est conçu pour l'entrée directe du signal de saisie.

5. Système de commande selon l'une des revendications 1 à 4, dans lequel le système de commande est conçu pour faire fonctionner l'IHM de la machine (6) sans toucher à la machine et aux éléments de commande de la machine.

6. Système d'exploitation selon l'une des revendications 1 à 5, dans lequel le système d'exploitation comprend un système de localisation pour détecter la position et/ou l'orientation des lunettes et est conçu pour sélectionner un ou plusieurs éléments de fonctionnement et informations de l'IHM pour l'affichage en fonction de la position et/ou de l'orientation des lunettes (4).

7. Système d'exploitation selon l'une des revendications 1 à 6, dans lequel l'élément de commande et les informations de l'IHM sont affichés dans les lunettes (4) et/ou sur un écran d'affichage externe.
